Europäisches Patentamt

European Patent Office

Office européen des brevets

(19)

(11) Veröffentlichungsnummer: **0 263 197 B1**

# EUROPÄISCHE PATENTSCHRIFT

(12)

(45) Veröffentlichungstag der Patentschrift: **02.01.92**

(21) Anmeldenummer: **86113971.5**

(22) Anmeldetag: **08.10.86**

(51) Int. Cl.5: **B01D  35/18**, B01D 35/20, B01D 25/12

(54) **Vorrichtung zum Entwässern und Trocknen von in Flüssigkeiten dispergierten Feststoffteilchen.**

(43) Veröffentlichungstag der Anmeldung:
**13.04.88 Patentblatt  88/15**

(45) Bekanntmachung des Hinweises auf die
Patenterteilung:
**02.01.92 Patentblatt  92/01**

(84) Benannte Vertragsstaaten:
**BE DE FR GB IT NL SE**

(56) Entgegenhaltungen:
**DE-A- 1 292 628       DE-A- 2 244 917**
**DE-A- 2 856 626       DE-C- 600 820**
**FR-A- 694 717         FR-A- 1 599 954**
**GB-A- 1 151 028       US-A- 1 377 022**

(73) Patentinhaber: **BULGARSKA INDUSTRIALNA STOPANSKA ASSOCIATIA**
**134, Rakovski St.**
**Sofia(BG)**

(72) Erfinder: **Beltchev, Beltcho Alexandrov**
**Neofit Rilski-Strasse 57**
**Sofia(BG)**

(74) Vertreter: **Finck, Dieter et al**
**Patentanwälte v. Füner, Ebbinghaus, Finck**
**Mariahilfplatz 2 & 3**
**W-8000 München 90(DE)**

EP 0 263 197 B1

## Beschreibung

Die Erfindung betrifft eine Vorrichtung mit einer Filterpresse, welche nebeneinander angeordnete Filterelemente aufweist, mit einer an die Filterelemente anschließbaren Vakuumquelle und Druckquelle, mit einer Heizfluidquelle für die Beheizung der Filterelemente, mit Zuführungseinrichtungen für die Flüssigkeit mit den darin dispergierten Feststoffteilchen zu den Filterelementen, mit Kanälen in den Filterelementen zum Abführen der Flüssigkeit und mit unter den Filterelementen angeordneten Sammeleinrichtungen für die entwässerten und getrockneten Feststoffteilchen.

Eine solche Vorrichtung ist aus der US-A- 13 77 022 bekannt. Die Vorrichtung weist eine Filterpresse in Form eines horizontal angeordneten langgestreckten Gehäuses auf, in welchem in festgelegten Abständen voneinander Filterelemente angeordnet sind. Das Gehäuse ist in seiner Längsrichtung geteilt, wobei der eine Gehäuseteil nach oben aufklappbar ist. In das Gehäuse münden Zuführungsleitungen für die Suspension. Die an dem feststehenden Gehäuseteil befestigten Filterelemente haben auf ihrer Außenseite Rippen, über die ein Filtertuch gespannt ist. Die Filterelemente sind in ihrem Inneren mit Kanälen versehen, die über einen Kollektorkanal mit einer Anschlußleitung an ein Vakuum verbunden sind. Im Inneren des Filterelements sind ferner getrennt von den Absaugkanälen Heizkanäle vorgesehen, durch die über entsprechende Anschlußleitungen ein Heizfluid geführt werden kann. Wenn das Gehäuse geschlossen ist, wird die Suspension eingefüllt, die die freien Räume zwischen den Filterelementen in dem Gehäuse füllt. Durch Anlegen des Vakuums an die Filterelemente wird die Flüssigkeit aus der Suspension durch die Filtertücher in die Filterelemente gesaugt und von ihnen abgeführt. Mit Hilfe der Heizelemente wird den sich auf den Filtertüchern ansammelnden Feststoffteilchen der Suspension Wärme zugeführt, um den Filterkuchen zu trocknen. Danach wird das Gehäuse geöffnet, so daß der Filterkuchen nach unten fallen kann. Um ein Haftenbleiben von Filterkuchen an den Filtertüchern auszuschließen, können die Filterelemente seitlich verschwenkt werden, so daß sie gegeneinanderstoßen.

Bei der bekannten Vorrichtung ist der Wärmeübergang von dem Filterelement auf die Suspension zwischen den Filtertüchern benachbarter Filterelemente unzureichend, da die Wärme entgegen dem Flüssigkeitsstrom in das Filterelement hinein über die Rippen und das Filtertuch transportiert werden muß. Ferner wird ein Großteil der zugeführten Wärme mit der Filtrierflüssigkeit abgeführt.

Aus der FR-A- 694 717 ist eine Filterpresse bekannt, bei welcher zwischen zwei Filterplatten jeweils eine Filterkammer vorgesehen ist. Jede Filterplatte ist filterkammerseitig mit einem Filtertuch bespannt und hat auf ihrer Unterseite eine Sammelleitung für den Filtratablauf. Jede Filterkammer hat auf ihrer Oberseite einen Einlaß für die zu filtrierende Suspension, die über eine Zuführungsleitung zugeführt wird. In jeder Filterkammer ist ein Heizelement so aufgehängt, daß es allseitig mit der zu filtrierenden Suspension in Kontakt steht. Gase und Dämpfe können über den Einlaß auf der Oberseite der Filterkammer in die Zuführungsleitung für die Suspension entweichen. Das Heizfluid wird über Aufhängungen für die Heizelemente bildende Rohre zu- und abgeführt.

Bei der bekannten Filterpresse ist die Wärmezufuhr in den Eckbereichen der Filterkammer geringer als in den übrigen Bereichen der Filterkammer, was eine ungleichförmige Trocknung des Filterkuchens ergibt. Eine Abführung von durch die Erwärmung des Filterkuchens gebildeten Dämpfen erfolgt nicht über den Filtratablauf, sondern über die oberen Einführungen für die Suspension, die, um diese Abführung zu ermöglichen, nach dem Füllen der Filterkammern mit zu filtrierender Suspension im wesentlichen frei von Suspensionen gehalten werden müssen.

Die der Erfindung zugrundeliegende Aufgabe besteht nun darin, die Vorrichtung der gattungsgemäßen Art so auszubilden, daß sich die Entwässerung und Trocknung der in den Flüssigkeiten dispergierten Feststoffteilchen mit vermindertem Energieverbrauch und hohem Trocknungsgrad erreichen läßt.

Diese Aufgabe wird ausgehend von der Vorrichtung der gattungsgemäßen Art dadurch gelöst, daß die Filterelemente zwischen einem vorrichtungsfesten Kopf und einem horizontal verschiebbaren Kopf angeordnet sind, daß die Köpfe mit der Vakuumquelle und einer mit der Druckquelle verbindbaren Speisedruckkammer für die Flüssigkeit mit den darin dispergierten Feststoffteilchen verbindbar sind, daß die Filterelemente von abwechselnd aufeinanderfolgend angeordneten Vakuumfilterplatten und Heizplatten gebildet werden, daß jede Vakuumfilterplatte einen geschlossenen Rahmen mit einer Vakuumkammer aufweist, die auf beiden Seiten jeweils von einer längs einer Kontaktfläche gasdicht an dem Rahmen angebrachten porösen Trennwand abgeschlossen ist, die durch Zwischenkanäle mit Entwässerungskanälen in dem Rahmen verbunden ist und durch die sich eine Speiseöffnung erstreckt, und daß jede Heizplatte einen geschlossenen Rahmen mit zu den Entwässerungskanälen in dem Rahmen der Vakuumfilterplatten bei geschlossener Filterpresse fluchtend ausgerichteten Entwässerungskanälen aufweist, der längs seines größten Querschnitts durch eine elektrische Heizmembran oder durch eine Heizfluidmembran symmetrisch in zwei Aufnahmekammern unterteilt ist, die durch eine Speiseöffnung verbunden sind, und von denen jede von dem Rahmen der Heizplatte, der zugehörigen Heizmembran bzw. Heizfluidmembran und der porösen Trennwand der angrenzenden Vakuumfilterplatte gebildet wird.

Mit der erfindungsgemäßen Vorrichtung ist es möglich, an der elektrischen Heizmembran oder der Heizfluidmembran einen raschen Anstieg der Temperatur in der Suspension zu erzeugen, wodurch sich ein Dampfmantel bildet, unter dessen Wirkung ein heftiges Ausstoßen von kapillarer Flüssigkeit aus den Feststoffen in Richtung von den elektrischen Heizmembranen bzw. Heizfluidmembranen zu den porösen Trennwänden erfolgt, wo unter der Wirkung des Vakuums die Flüssigkeit und Dampf abgesaugt werden. Die Ausstoßung bzw. die Extraktion der Kapillarflüssigkeit aus der Suspension bzw. aus dem Feststoffmaterial, wie sie mit der erfindungsgemäßen Vorrichtung erreichbar ist, vermindert wesentlich die zur Trocknung, also zur Verdampfung notwendige Energie, da ein bedeutender Teil der Flüssigkeit nicht in Dampf übergeht.

Durch das Zusammenwirken der unter Druck gesetzten, zu filtrierenden Flüssigkeit und des an die porösen Trennwände angelegten Vakuums sowie der Wärmezufuhr, aufgrund derer die Flüssigkeit aus den Kapillaren der Feststoffteilchen in Richtung der porösen Trennwand ausgestoßen wird, wird eine schnelle Entwässerung und gute Trocknung der Feststoffteilchen erreicht, wobei der Energieaufwand weitgehend reduziert wird. Da die Entwässerung ohne Abgabe von Staub, Aerosolen, Dämpfen oder anderen Komponenten an die Umwelt abläuft, ist das erfindungsgemäße Verfahren äußerst umweltfreundlich.

Zur Verbesserung des Wirkungsgrades der Vorrichtung ist in der Speisedruckkammer ein Wärmeaustauscher vorgesehen, durch den die durch die porösen Trennwände der Vakuumfilterplatten abgesaugte Flüssigkeit geführt ist, wodurch die für den folgenden Entwässerungs- und Trocknungsprozeß vorgesehene Suspension bereits vorgewärmt wird.

Um den Anschluß des beweglichen Kopfes der Vorrichtung an die Vakuumquelle konstruktiv einfach zu gestalten, besteht die lösbare Verbindung des beweglichen Kopfes mit einer lagefesten Anschlußleitung an die Vakuumquelle aus einer kopfseitigen hohlkegeligen Öffnung und aus einem beweglichen elastischen Kegel, der koaxial auf die Anschlußleitung aufgesteckt ist und über Führungselemente mit Federn mit der Anschlußleitung verbunden ist. Durch das Andrücken des elastischen Kegels an die Wände der hohlkegeligen Öffnung unter der Wirkung der Federn dichtet die lösbare Verbindung für das Vakuum eigenständig ab, wobei diese Wirkung noch durch den Einfluß des Vakuums verstärkt wird.

Ebenfalls konstruktiv einfach ist die Verbindung zwischen dem beweglichen Kopf und der Suspensionszuführung dann, wenn die lösbare Verbindung des beweglichen Kopfs mit einer lagefesten Anschlußleitung an die Speisedruckkammer eine kopfseitige hohlkegelige Öffnung und eine koaxial an der Anschlußleitung angebrachte elastische kegelförmige Düse aufweist. Unter dem Druck der einfließenden Suspension dehnt sich die elastische Kegeldüse aus und legt sich fest an die hohlkegelige Öffnung an, so daß die lösbare Verbindung selbst abdichtet, und die Suspension nicht ausströmen kann.

Die an den porösen Trennwänden angesammelten entwässerten und getrockneten Feststoffteilchen lassen sich dann einfach entfernen, wenn die Filterelemente an in Vibrationen versetzbaren horizontalen Tragelementen längsverschiebbar angeordnet sind.

Die Vibrationen werden dabei zweckmäßigerweise dadurch erzeugt, daß die horizontalen Tragelemente mit vertikalen, jeweils in einem Zentralhohlraum von senkrechten Tragsäulen angeordneten Stützen versehen sind, von denen jede frei auf einem in der Tragsäule beweglichen Schlagkörper mit Rollen aufliegt, die mit Reibung an einem Exzenter sitzen, der in einem massiven Kasten auf einer Welle gelagert ist, die sich auf der Längsachse der Filterpresse erstreckt, wobei die Wellen miteinander durch eine Verbindungsstange gekoppelt sind.

Die Druckbeaufschlagung der Suspension wird vorteilhafterweise dadurch erreicht, daß der obere Teil der Speisedruckkammer mit einem Ausgleichsgasballon in Verbindung steht, daß ihr unterer Teil durch einen Hahn mit einer Kompressionseinrichtung verbunden ist, daß die Speisedruckkammer mit einem parallel geschalteten Rohr verbunden ist, das an einem Ende durch einen zweiten Hahn mit der Kompressionseinrichtung in Verbindung steht und an seinem anderen Ende mit der von einem Speisedruckrohr gebildeten Zuführungseinrichtung für die Flüssigkeit mit den darin dispergierten Feststoffteilchen verbunden ist, und daß das Speisedruckrohr auf der einen Seite durch einen dritten Hahn mit der Speisedruckkammer und auf der anderen Seite mit dem vorrichtungsfesten Kopf verbunden und mit dem horizontal verschiebbaren Kopf verbindbar ist.

Für den Abtransport des Filterkuchens und für sein abschließendes Trocknen ist vorzugsweise unter den Köpfen, den Vakuumfilterplatten und den Heizplatten ein Bunker mit einer Schnecke angeordnet, wobei im Bunker Druckluftleitungen angebracht sind, an denen bewegliche Schirme angebracht sind, die an einem Ventilationsgewölbe aufgehängt sind, das auf den Tragsäulen sitzt.

Anhand von Zeichnungen wird ein Ausführungsbeispiel der Erfindung näher erläutert. Es zeigen:

Fig. 1    schematisch die Vorrichtung in der Seitenansicht;

Fig. 2    schematisch die geöffnete Filterpresse der Vorrichtung in der Seitenansicht;

Fig. 3    eine Heizplatte der Filterpresse;

Fig. 4    die Heizplatte im Querschnitt;

Fig. 5    eine Heizplatte mit elektrischen Heizelementen teilweise geschnitten;

Fig. 6    eine Heizplatte mit einer Heizfluidmembran teilweise geschnitten;

Fig. 7    eine Vakuumfilterplatte der Filterpresse teilweise geschnitten;

Fig. 8    die Vakuumfilterplatte im Querschnitt;

Fig. 9    schematisch im Axialschnitt einen Speise- und Kompressionsbehälter;

Fig. 10   im Querschnitt den als Vakuumfilterplatte wirkenden verschiebbaren Kopf der Filterpresse und

Fig. 11   schematisch die Anordnung der vibrierenden Einrichtungen der Filterpresse.

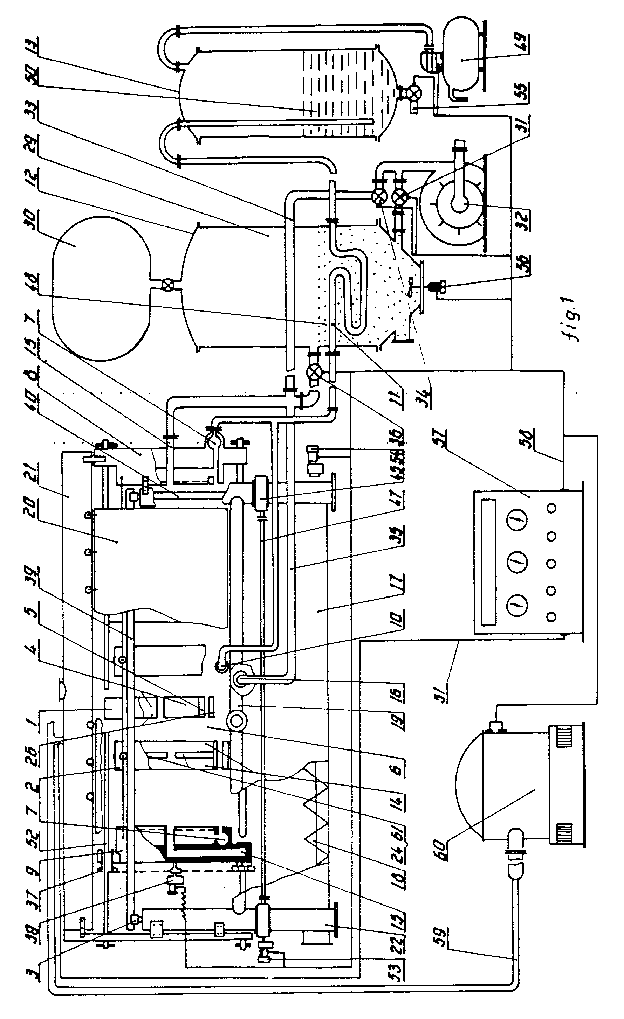

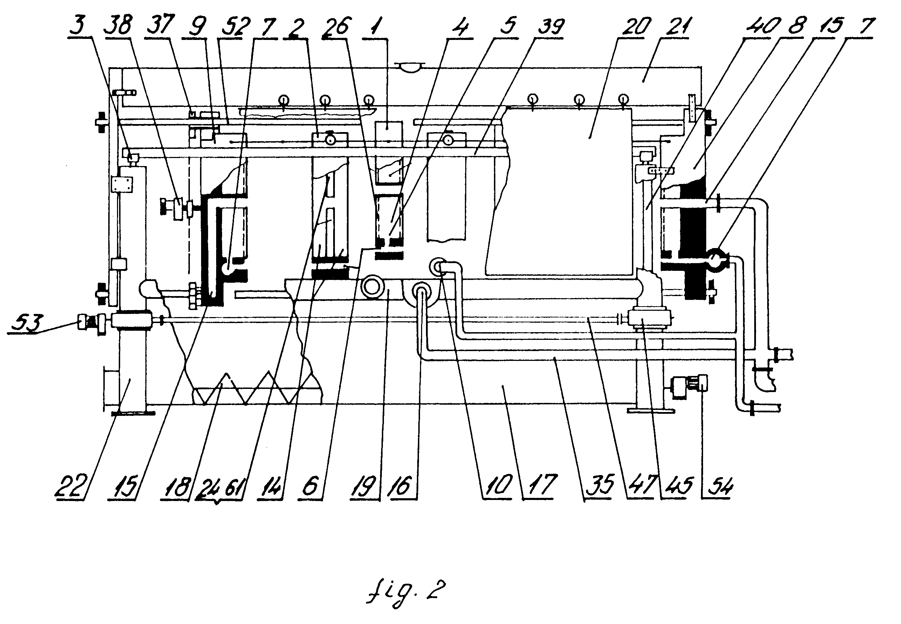

Die in Fig. 2 gezeigte Filterpresse der Vorrichtung zum Entwässern und Trocknen von in Flüssigkeiten dispergierten Feststoffteilchen, wie sie in Fig. 1 gezeigt ist, besteht aus miteinander durch Scharniere 64 verbundenen abwechselnd in einer horizontalen Reihe angeordneten Vakuumfilterplatten 1 und Heizplatten 2, die durch Rollen 63 an vibrierenden Einrichtungen 3 aufgehängt sind. In jeder Vakuumfilterplatte I ist eine Vakuumkammer 4 vorgesehen, die durch Zwischenkanäle 5, Entwässerungskanäle 6 und Kollektorrohre 7 mit einem Vakuumkollektor 13 verbunden ist. Die Kollektorrohre 7 sind an einem vorrichtungsfesten Kopf 8 und einem horizontal verschiebbaren Kopf 9 angeordnet, die die Funktion von Vakuumfilterplatten erfüllen, mit einer lösbaren Verbindung 10 versehen und über einen Wärmeaustauscher 11 eines Speise- und Kompressionsbehälters 12 an den Vakuumkollektor 13 angeschlossen, der von einem thermoisolierten Vakuumgefäß gebildet wird und der mit einer Vakuumpumpe 49 verbunden ist.

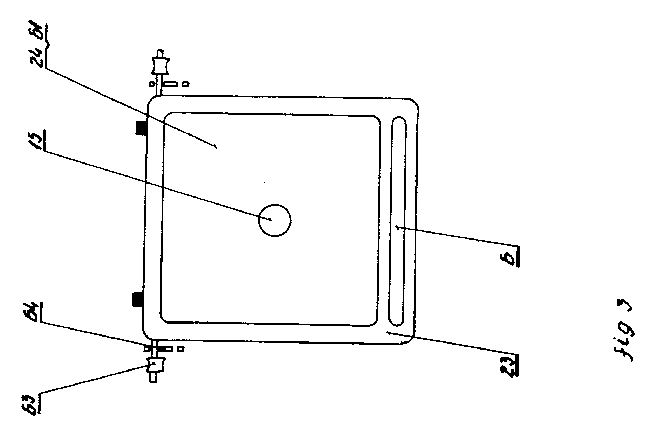

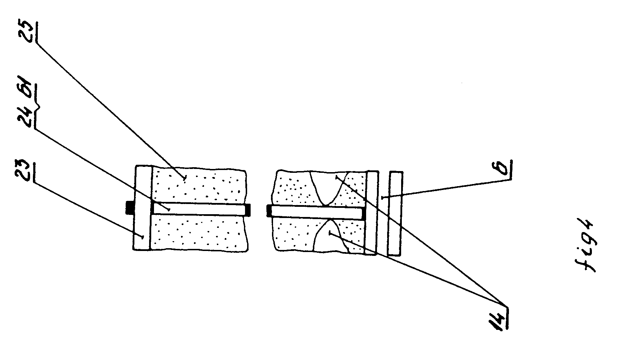

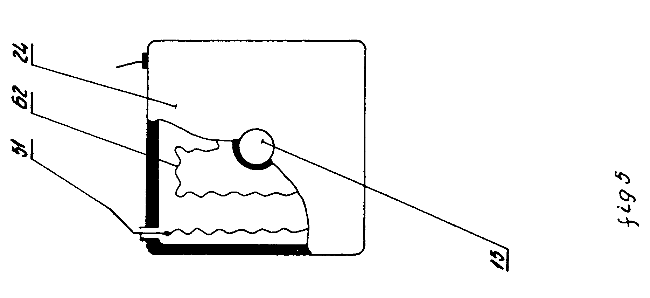

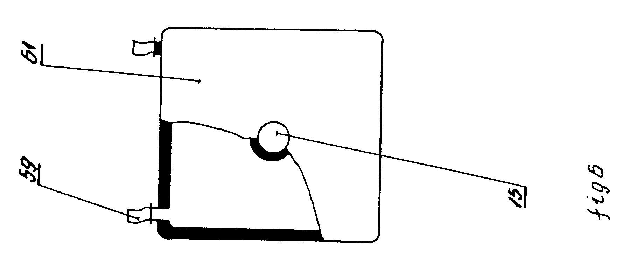

Die im einzelnen in Fig. 3 bis 6 gezeigte Heizplatte 2 besteht aus einem geschlossenen Rahmen 23, der in seinem freien Querschnitt durch eine elektrische Heizmembran 24 mit elektrischen Heizelementen 62 oder durch eine Heizfluidmembran 61 symmetrisch in zwei Aufnahmekammern 14 unterteilt ist, die durch eine Speiseöffnung 15 in Verbindung stehen. In dem Rahmen 23 sind die Entwässerungskanäle 6 getrennt von den Aufnahmekammern 14 und der elektrischen Heizmembran 24 oder der Heizfluidmembran 61 angeordnet.

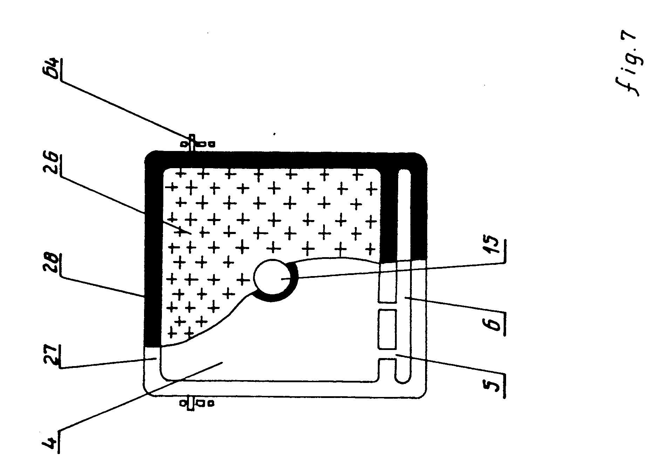

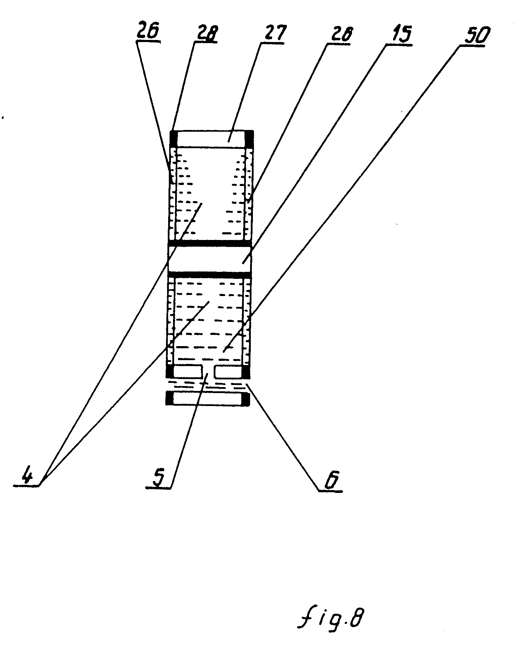

Jede Vakuumfilterplatte 1 (Fig. 8) besteht aus einem geschlossenen Rahmen 27 und einer Vakuumkammer 4. Auf beiden Seiten der Vakuumkammer 4 sind poröse Trennwände 26 längs der Kontaktflächen 28 mit dem geschlossenen Rahmen 27 gasdicht verbunden. Die Vakuumkammer 4 steht über die Zwischenkanäle 5 mit dem Entwässerungskanal 6 in ihrem geschlossenen Rahmen 27 in Verbindung. Durch die Vakuumkammer 4 und die porösen Trennwände 26 jeder Vakuumfilterplatte 1 erstreckt sich eine rohrförmige Speiseöffnung 15. Die durch die Speiseöffnungen 15 zugeführte Flüssigkeit mit darin dispergierten Feststoffteilchen, im folgenden als Suspension 48 bezeichnet, wird zwischen den Rahmen 23 mit der Heizmembrane 24 oder der Heizfluidmembran 61 und den porösen Trennwänden 26 der benachbarten Vakuumfilterplatten 1 in den Aufnahmekammern 14 aufgenommen. Die Vakuumfilterplatten 1 stehen mit den Heizplatten 2 über die Scharniere 64 in Verbindung (Fig. 3 und 7), wodurch sie bei geöffneter Filterpresse über die Heizplatten 2 angehoben sind, was in Fig. 1, 2 und 11 zu sehen ist, während bei geschlossener Filterpresse die Köpfe 8, 9, die Vakuumplatten 1 und die Heizplatten 2 so angeordnet sind, daß die Entwässerungskanäle 6 und die Kollektorrohre 7 ebenso wie die Speiseöffnungen 15 fluchtend und aneinander abdichtend angeordnet sind.

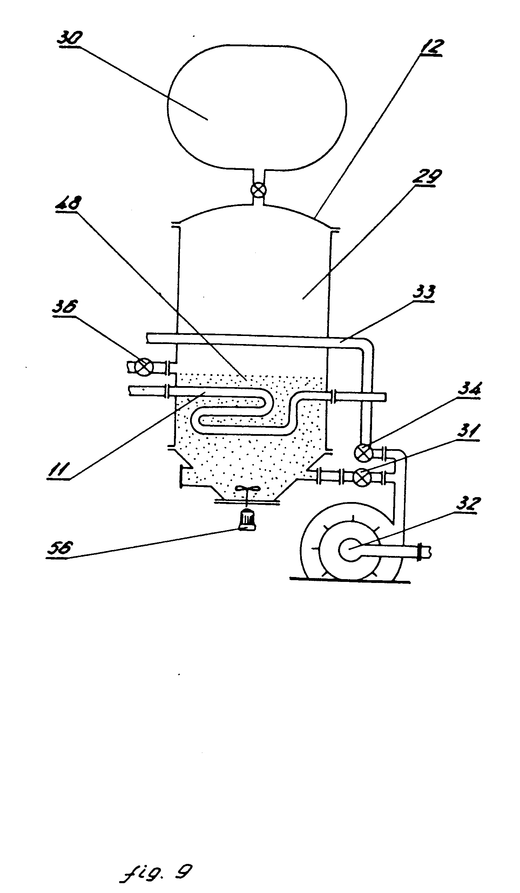

Der Speise- und Kompressionsbehälter 12, wie er in Fig. 9 gezeigt ist, besteht aus einer Speisedruckkammer 29, in der der Wärmeaustauscher 11 angeordnet ist. Der obere Teil der Speisedruckkammer 29 ist mit einem Ausgleichsgasballon 30 verbunden. In dem unteren Teil befindet sich ein Rührwerk 56. Der untere Teil ist durch einen Hahn 31 mit einer Kompressionseinrichtung 32 verbunden. Die Speisedruckkammer 29 ist zu einem Rohr 33 parallel geschaltet, welches durch einen zweiten Hahn 34 mit der Kompressionseinrichtung 32 verbunden ist. Das andere Ende des Rohrs 33 ist mit einem Speisedruckrohr 35 verbunden. Das Speisedruckrohr 35 steht über einen dritten Hahn 36 mit der Speisedruckkammer 29 in Verbindung, mündet mit seinem anderen Ende in der Speiseöffnung 15 des vorrichtungsfesten Kopfes 8 und ist über eine lösbare Verbindung 16 mit dem horizontal verschiebbaren Kopf 9 verbindbar.

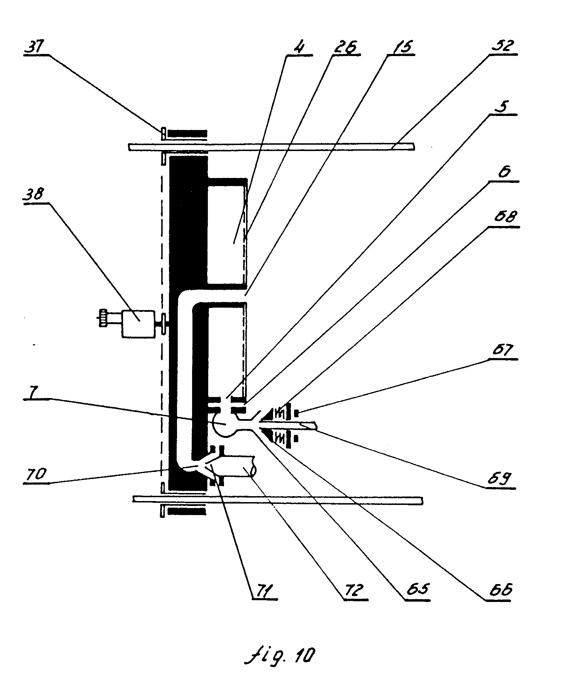

An dem horizontal verschiebbaren Kopf 9 sind, wie aus Fig. 10 zu ersehen ist, Antriebsmuttern 37 angebracht, die mit einem Motor mit Untersetzungsgetriebe 38 verbunden sind. Die Entwässerungskanäle 6 münden in das Kollektorrohr 7, das mit der lösbaren Verbindung 10 für das Vakuum verbunden ist. Die Speiseöffnung 15 des horizontal verschiebbaren Kopfes 9 ist an die lösbare Verbindung 16 für die Suspension 48 angeschlossen. Die Antriebsmuttern 37 führen den verschiebbaren Kopf 9 auf vorrichtungsfest angeordneten Schraubenspindeln 52.

Die lösbare Verbindung 10 für das Vakuum besteht aus einer hohlkegeligen Öffnung 65 und aus einem beweglichen elastischen Kegel 66 der durch Führungselemente 67 und Federn 68 mit einer vorrichtungsfesten Anschlußleitung 69 verbunden ist. Der bewegliche elastische Kegel 66 ist längs seiner Zentralachse auf die Anschlußleitung 69 aufgesteckt.

Die Aufnahmekammern 14 der Heizplatten 2 sind über Speiseöffnungen 15 des vorrichtungsfesten Kopfes 8 und des horizontal verschiebbaren Kopfes 9 über die lösbare Verbindung 16 mit dem Speise- und Kompressionsbehälter 12 verbunden. Die lösbare Verbindung 16 für die Suspension 48 besteht aus einer hohlkegeligen Öffnung 70 und aus einer elastischen kegelförmigen Düse 71, die an einer vorrichtungsfesten Anschlagsleitung 72 befestigt ist, die sich längs der Achse der Düse 71 erstreckt.

Unter den Köpfen 8 und 9 und den Vakuumfilterplatten 1 und den Heizplatten 2 befindet sich ein Bunker 17 mit einer Schnecke 18, die von einem Motor über eine Untersetzung 54 angetrieben wird. Am Bunker 17 sind Druckluftleitungen 19 vorgesehen, über denen bewegliche Schirme 20 angebracht sind, die an einem Ventilationsgewölbe 21 aufgehängt sind. Das Ventilationsgewölbe 21 sitzt auf Tragsäulen 22, erstreckt sich längs der Längsachse der Filterpresse und ist mit einem Ventilator verbunden.

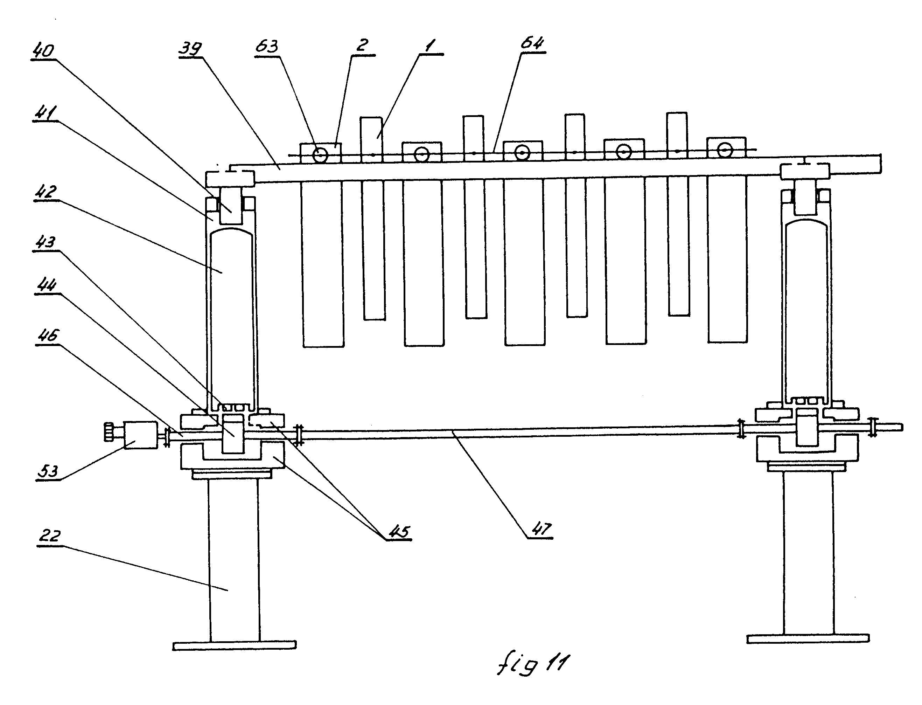

Wie aus Fig. 11 zu ersehen ist, sind als Vibratoren 3 horizontale Tragelemente 39 vorgesehen, die mit senkrechten Stützen 40 verbunden sind, die in einem Zentralhohlraum 41 in den senkrechten Tragsäulen 22 angeordnet sind. Jede senkrechte Stütze 40 sitzt frei auf einem in der Tragsäule 22 beweglichen Schlagkörper 42, der mit Rollen 43 versehen ist, die mit einem Exzenter 44 in Reibungseingriff stehen, der in einem massiven Kasten 45 angeordnet ist. Die Exzenter 44 sitzen auf Wellen 46, die sich auf der Längsachse der Filterpresse erstrecken, sind durch eine nicht verdrehbare Verbindungsstange 47 verbunden und an ein regulierbares Motoruntersetzungsgetriebe 53 angeschlossen.

Der Vakuumkollektor 13 ist an seinem oberen Teil mit einer Vakuumpumpe 49 verbunden, während an seinem unteren Teil ein Auslaßhahn 55 vorgesehen ist. Eine Steuer-Schalttafel 57 steht über Verbindungsleitungen 58 mit den Motoruntersetzungsgetrieben 38, 54 und 53, dem Rührwerk 56, dem Hahn 31, dem Hahn 34, dem Hahn 36, dem Hahn 55, der Kompressionseinrichtung 32, der Vakuumpumpe 49 und der Heizfluidquelle 60 in Verbindung. Die elektrische Heizmembran 24 ist durch eine elastische elektrische Verbindung 51 mit der SteuerSchalttafel 57 verbunden. Die Heizfluidmembran 61 ist durch eine elastische Rohrverbindung 59 mit der Heizfluidquelle 60 verbunden.

Die Suspension 48 gelangt bei geschlossener Filterpresse unter der Wirkung der Kompressionseinrichtung 32 über den Hahn 34, das Rohr 33, das Speisedruckrohr 35, die Speiseöffnung 15 des vorrichtungsfesten Kopfes 8 und durch die lösbare Verbindung 16 und die Speiseöffnung 15 des verschiebbaren Kopfes 9 in die Aufnahmekammern 14 der Heizplatten 2. Unter dem Druck der einfließenden Suspension 48 dehnt sich die elastische Kegeldüse 71 aus und legt sich fest an die hohlkegelige Öffnung 70 an, so daß die lösbare Verbindung 16 selbst abdichtet und die Suspension 48 nicht ausströmen kann. Gleichzeitig wird im Anfangszyklus auch die Speisedruckkammer 29 über den Hahn 31 gefüllt. Nach dem Füllen der Aufnahmekammern 14 wird das Rohr 33 über den Hahn 34 abgetrennt. Es beginnt der Kompressionsvorgang, bei dem die Suspension 48 aus der Speisedruckkammer 29 über den Hahn 36 zugeführt wird. Der Druck im Ausgleichsgasballon 30 entspricht dem Druck in der Kompressionseinrichtung 32. Bei Unterbrechung des elektrischen Stroms bleiben die Hähne 31 und 34 geschlossen. Es folgt der Filtrations- bzw. Entwässerungsvorgang mit Hilfe des im Ausgleichsgasballon 30 komprimierten Gases, wodurch eine Energieautonomie bei der Filtration erreicht wird.

Noch mit der anfänglichen Zufuhr der Suspension 48 beginnt in der geschlossenen Filterpresse das im Vakuumkollektor 13 durch die Vakuumpumpe 49 erzeugte Vakuum zu wirken. Dabei wird über den Wärmeaustauscher 11 hinweg durch die lösbare Verbindung 10, die Kollektorrohre 7, die Entwässerungskanäle 6 und die Zwischenkanäle 5 Vakuum in den Vakuumkammern 4 erzeugt. Infolge des Andrückens des elastischen Kegels 66 an die Wände der hohlkegeligen Öffnung 65 unter der Wirkung der Federn 68 dichtet die lösbare Verbindung 10 eigenständig ab. Aufgrund des Vakuums, beginnt Flüssigkeit 50 bzw. Filtrat durch die porösen Trennwände 26 in die Vakuumkammer 4 einzufließen. Dabei erhöht sich die Geschwindigkeit der Filtration infolge des hydrostatischen Drucks, der in den Aufnahmekammern 14 herrscht. Bei dieser kombinierten Druckwirkung fließt Flüssigkeit 50 ab und sammelt sich im Vakuumkollektor 13. Nach Erreichen des hydrostatischen Grenzdrucks und des kleinsten Vakuums, die zur Entwässerung der in den Aufnahmekammern 14 unter Druck vorhandenen Flüssigkeit mit Feststoffteilchen 25 nötig sind, wird an die elektrischen Heizmembranen 24 eine elektrische Spannung über die elastische elektrische Verbindung 51 von der Steuer-Schalttafel 57 angelegt oder es wird den Heizfluidmembranen 61 ein Heizfluid über die elastische Rohrverbindung 59 von der Heizfluidquelle 60 zugeführt.

Der rasche Anstieg der Temperatur erzeugt um die elektrischen Heizmembranen 24 oder die Heizfluidmembranen 61 einen "Dampfmantel", unter dessen Wirkung ein heftiges Ausstoßen von kapillarer Flüssigkeit aus den Feststoffen 25 in Richtung von den elektrischen Heizmembranen 24 bzw. Heizfluidmembranen 61 zu den porösen Trennwänden 26 erfolgt. Hier werden unter der Wirkung des Vakuums die Flüssigkeit 50 und Dampf abgesaugt, die sich gemeinsam mit der darin gespeicherten Wärmeenergie im Vakuumkollektor 13 sammeln. Ein Teil dieser Energie wird über den Wärmeaustauscher 11 an die sich in der Speisedruckkammer 29 befindliche Suspension 48 abgegeben. Auf diese Weise wird im folgenden Zyklus die Suspension 48 mit höherer Temperatur zugeführt, was zur Beschleunigung des Filtrationsvorganges, einer Verminderung der Zyklus-Zeitdauer und einer Verringerung des Energieaufwands führt. Die Ausstoßung bzw. die Extraktion der Kapillarflüssigkeit aus der Suspension bzw. aus den Feststoffteilchen 25 vermindert wesentlich die zur Trocknung, d.h. zur Verdampfung notwendige Energie, da ein bedeutsamer Teil der Flüssigkeit nicht in Dampf übergeht.

Nach Erreichen der gewünschten Endfeuchtigkeit wird das Vakuum abgeschaltet. Die Filterpresse wird geöffnet, wobei der verschiebbare Kopf 9 mit Hilfe seines Motors mit Untersetzungsgetriebe 38 horizontal verschoben wird, das die Antriebsmuttern 37 auf den Schraubenspindeln 52 entsprechend dreht. Ein Beblasen der in den Aufnahmekammern 14 abgetrennten Feststoffteilchen 25 erfolgt über das Ventilationsgewölbe 21, das die erforderliche Luft durch die Druckluftleitungen 19 ansaugt. Nach dem Durchblasen werden die Vibratoren 3 eingeschaltet, wobei unter der Schlagvibrationswirkung der Exzenter 44, welche durch den Elektromotor 53 angetrieben sind, und der Schlagkörper 42 die entwässerten Feststoffteilchen 25 in den Bunker 17 fallen, von wo sie mit der Schnecke 18 ausgetragen werden, welche durch das Motoruntersetzungsgetriebe 54 angetrieben wird. Nach dem Entfernen der Feststoffteilchen 25 fängt der nächste Zyklus an. Die im Vakuumkollektor 13 gesammelte Flüssigkeit 50 wird zusammen mit der darin gespeicherten Wärmeenergie periodisch durch den Auslaßhahn 55 für Industrie- oder Haushaltszwecke abgeführt. Die Zyklen laufen ohne Abgabe von Staub, Aerosolen, Dämpfen oder anderen Komponenten , die in der zu verdickenden, zu filtrierenden und zu trocknenden Suspension 48 enthalten sind, an die Umgebung ab. Die Wartung des Inneren der Filterpresse erfolgt durch Öffnung der beweglichen Schirme 20. Die Stromzuführung, die Kontrolle und die Regulierung der Arbeitsbedingungen der Filterpresse, des Speise- und Kompressionsbehälters 12 und des Vakuumkollektors 13 erfolgen durch die Steuer-Schalttafel 57 über die Verbindungsleitungen 58. Die gleichzeitige Beschickung und Entwässerung der Filterpresse durch den vorrichtungsfesten Kopf 8 und den horizontal verschiebbaren Kopf 9 beschleunigt wesentlich den Produktionszyklus.

**Patentansprüche**

1. Vorrichtung zum Entwässern und Trocknen von in Flüssigkeiten dispergierten Feststoffteilchen
   - mit einer Filterpresse, welche nebeneinander angeordnete Filterelemente (1, 2) aufweist,
   - mit einer an die Filterelemente (1, 2) anschließbaren Vakuumquelle (49, 13) und Druckquelle (32, 30)
   - mit einer Heizfluidquelle (60) für die Beheizung der Filterelemente (1, 2),
   - mit Zuführungseinrichtungen (35) für die Flüssigkeit mit den darin dispergierten Feststoffteilchen zu den Filterelementen (1, 2),
   - mit Kanälen (5, 6) in den Filterelementen (1, 2) zum Abführen der Flüssigkeit und
   - mit unter den Filterelementen (1, 2) angeordneten Sammeleinrichtungen (17) für die entwässerten und getrockneten Feststoffteilchen,

   dadurch **gekennzeichnet,**
   - daß die Filterelemente (1, 2) zwischen einem vorrichtungsfesten Kopf (8) und einem horizontal verschiebbaren Kopf (9) angeordnet sind,
   - daß die Köpfe (8, 9) mit der Vakuumquelle (13, 49) und mit einer mit der Druckquelle verbindbaren Speisedruckkammer (29) für die Flüssigkeit mit den darin dispergierten Feststoffteilchen verbindbar sind,
   - daß die Filterelemente von abwechselnd aufeinander folgend angeordneten Vakuumfilterplatten (1) und Heizplatten (2) gebildet werden,
   - daß jede Vakuumfilterplatte (1) einen geschlossenen Rahmen (27) mit einer Vakuumkammer (4) aufweist, die auf beiden Seiten jeweils von einer längs einer Kontaktfläche (28) gasdicht an dem Rahmen (27) angebrachten porösen Trennwand (26) abgeschlossen ist, die durch Zwischenkanäle (5) mit Entwässerungskanälen (6) in dem Rahmen (27) verbunden ist und durch die sich eine Speiseöffnung (15) erstreckt, und
   - daß jede Heizplatte (2) einen geschlossenen Rahmen (23) mit zu den Entwässerungskanälen (6) in den Rahmen (27) der Vakuumfilterplatten (1) bei geschlossener Filterpresse fluchtend ausgerichteten Entwässerungskanälen (6) aufweist, der längs seines größten Querschnitts durch eine elektrische Heizmembran (24) oder durch eine Heizfluidmembran (61) symmetrisch in zwei Aufnahmekammern (14) unterteilt ist, die durch eine Speiseöffnung (15) verbunden sind und von denen jede von dem Rahmen (23) der Heizplatte (2), der dazugehörigen Heizmembran (24) bzw. Heizfluidmembran (61) und der porösen Trennwand (26) der angrenzenden Vakuumfilterplatte (1) gebildet wird.

2. Vorrichtung nach Anspruch 1, dadurch **gekennzeichnet,** daß in der Speisedruckkammer (29) ein Wärmetauscher (11) vorgesehen ist, durch den die durch die porösen Trennwände (26) der Vakuumfilterplatten (1) abgesaugte Flüssigkeit geführt ist.

3. Vorrichtung nach Anspruch 1 oder 2, dadurch **gekennzeichnet,** daß die lösbare Verbindung (10) des beweglichen Kopfes (9) mit einer lagefesten Anschlußleitung (69) an die Vakuumquelle (49, 13) eine kopfseitige hohlkegelige Öffnung (65) und einen beweglichen elastischen Kegel (66) aufweist, der koaxial auf die Anschlußleitung (69) aufgesteckt ist und über Führungselemente (67) mit Federn (68) mit der Anschlußleitung (69) verbunden ist.

4. Vorrichtung nach einem der Ansprüche 1 bis 3, dadurch **gekennzeichnet,** daß die lösbare Verbindung (16) des beweglichen Kopfes (9) mit einer lagefesten Anschlußleitung (72) an die Speisedruckkammer (12) eine kopfseitige hohlkegelige Öffnung (70) und eine koaxial an der Anschlußleitung (72) angebrachte elastische kegelförmige Düse (71) aufweist.

5. Vorrichtung nach einem der Ansprüche 1 bis 4, dadurch **gekennzeichnet,** daß die Filterelemente (1, 2) an in Vibrationen versetzbaren horizontalen Tragelementen (39) längsverschiebbar angeordnet sind.

6. Vorrichtung nach Anspruch 5, dadurch **gekennzeichnet,** daß die horizontalen Tragelemente (39) mit vertikalen, jeweils in einem Zentralhohlraum (41) von senkrechten Tragsäulen (22) angeordneten Stützen (40) versehen sind, von denen jede frei auf einem in der Tragsäule (22) beweglichen Schlagkörper (42) mit Rollen (43) aufliegt, die mit Reibung an einem Exzenter (44) sitzen, der in einem massiven Kasten (45) auf einer Welle (46) gelagert ist, die sich auf der Längsachse der Filterpresse erstreckt, wobei die Wellen (46) miteinander durch eine Verbindungsstange (47) gekoppelt sind.

7. Vorrichtung nach einem der Ansprüche 1 bis 6, dadurch **gekennzeichnet,** daß der obere Teil der Speisedruckkammer (29) mit einem Ausgleichsgasballon (30) in Verbindung steht, daß ihr unterer Teil durch einen Hahn (31) mit einer Kompressionseinrichtung (32) verbunden ist, daß die Speisedruckkammer (29) mit einem parallel geschalteten Rohr (33) verbunden ist, das an einem Ende durch einen zweiten Hahn (34) mit der Kompressionseinrichtung (32) in Verbindung steht und an seinem anderen Ende mit der von einem Speisedruckrohr (35) gebildeten Zuführungseinrichtung für die Flüssigkeit mit den darin dispergierten Feststoffteilchen verbunden ist, und daß das Speisedruckrohr (35) auf der einen Seite durch einen dritten Hahn (36) mit der Speisedruckkammer (29) und auf der anderen Seite mit dem vorrichtungsfesten Kopf (8) verbunden und mit dem horizontal verschiebbaren Kopf (9) verbindbar ist.

8. Vorrichtung nach einem der Ansprüche 1 bis 7, dadurch **gekennzeichnet,** daß unter den Köpfen (8, 9), den Vakuumfilterplatten (1) und den Heizplatten (2) ein Bunker (17) mit einer Schnecke (18) angeordnet ist, daß an dem Bunker (17) Luftleitungen (19) angebracht sind, an denen bewegliche Schirme (20) angebracht sind, und daß die beweglichen Schirme (20) an einem Ventilationsgewölbe (21) aufgehängt sind, das auf den Tragsäulen (22) sitzt.

**Claims**

1. Apparatus for dewatering and drying solid particles dispersed in fluids having
   - a filter press which has filter elements (1, 2) arranged side by side;
   - a vacuum source (49, 13) and pressure source (32, 30) connectable to the filter elements (1, 2);
   - a heating fluid source (60) for heating the filter elements (1, 2);
   - supply devices (35), for the fluid with the solid particles dispersed therein, to the filter elements (1, 2);
   - conduits (5, 6) in the filter elements (1, 2) for removing the fluid; and
   - collecting devices (17) arranged underneath the filter elements (1, 2) for the dewatered and dried solid particles, characterised

- in that the filter elements (1, 2) are arranged between a head (8), which is fixed in relation to the apparatus, and a horizontally displaceable head (9);
- in that the heads (8, 9) are connectable with the vacuum source (13, 49) and with a feed pressure chamber (29) for the fluid with the solid particles dispersed therein, which can be connected with the pressure source;
- in that the filter elements are formed by vacuum filter plates (1) and heating plates (2) which are arranged alternately following one another;
- in that each vacuum filter plate (1) has a closed frame (27) with a vacuum chamber (4) which is closed off on both sides, respectively, by a porous partition wall (26), provided, in a gas-tight manner, on the frame (27) along a contact surface (28), is connected by means of intermediate conduits (5) with dewatering conduits (6) in the frame (27) and through which a feed opening (15) extends; and
- in that each heating plate (2) has a closed frame (23) which has dewatering conduits (6) oriented, when the filter press is closed, in alignment with the dewatering conduits (6) in the frame (27) of the vacuum filter plates (1) and which closed frame is subdivided along its greatest cross section, by means of an electrical heating membrane (24) or by means of a heating fluid membrane (61), symmetrically into two receiving chambers (14) which are connected by means of a feed opening (15) and each of which is formed by the frame (23) of the heating plate (2), the heating membrane (24) or heating fluid membrane (61) associated therewith and the porous partition wall (26) of the adjacent vacuum filter plate (1).

2. Apparatus according to claim 1, characterised in that a heat exchanger (11) is provided in the feed pressure chamber (29) through which is guided the fluid removed by suction through the porous partition walls (26) of the vacuum filter plates (1).

3. Apparatus according to claim 1 or 2, characterised in that the separable connection (10) of the movable head (9) with a stable connection duct (69) to the vacuum source (49, 13) has an opening (65) on the head side in the form of a hollow cone and a movable elastic cone (66) which is plugged coaxially onto the connection duct (69) and is connected by way of guide elements (67) with springs (68) with the connection duct (69).

4. Apparatus according to one of the claims 1 to 3, characterised in that the separable connection (16) of the movable head (9) with a stable connection duct (72) to the feed pressure chamber (12) has an opening (70) on the head side in the form of a hollow cone and an elastic conical nozzle (71) provided coaxially on the connection duct (72).

5. Apparatus according to one of the claims 1 to 4, characterised in that the filter elements (1, 2) are arranged so as to be longitudinally displaceable on horizontal supporting elements (39) which can be set vibrating.

6. Apparatus according to claim 5, characterised in that the horizontal supporting elements (39) are provided with respective vertical supports (40) which are arranged in a central hollow space (41) of perpendicular supporting columns (22), and each of which supports (40) rests freely on an impact body (42), which impact body can be moved in the supporting column (22) with rollers (43), which rollers sit with friction on a cam (44) which is mounted in a strong caisson (45) on a shaft (46) which extends along the longitudinal axis of the filter press, the shafts (46) being coupled with each other by means of a connecting rod (47).

7. Apparatus according to one of the claims 1 to 6, characterised in that the upper portion of the feed pressure chamber (29) communicates with a compensating gas balloon flask (30), in that its lower portion is connected with a compression device (32) by means of a stopcock (31), in that the feed pressure chamber (29) is connected with a parallel-connected pipe (33) which is connected at one end with the compression device (32) by means of a second stopcock (34) and is connected at its other end with the supply device for the fluid with the solid particles dispersed therein, formed by a feed pressure pipe (35), and in that the feed pressure pipe (35) is connected on the one side, by means of a third stopcock (36), with the feed pressure chamber (29) and on the other side with the head (8), which is fixed in relation to the apparatus, and is connectable with the horizontally displaceable head (9).

8. Apparatus according to one of the claims 1 to 7, characterised in that a hopper (17) with a screw (18) is arranged underneath the heads (8, 9), the vacuum filter plates (1) and the heating plates (2), in that there are provided on the hopper (17) air ducts (19) on which there are provided movable screens (20), and in that the movable screens (20) are suspended on a ventilation arch (21) which sits on the supporting columns (22).

## Revendications

1. Appareil pour déshydrater et sécher des particules solides dispersées dans des liquides
    - comportant une presse filtrante qui présente des éléments filtrants (1, 2) disposés les uns à côté des autres,
    - comportant une source de vide (49, 13) et une source de pression (32, 30) raccordables aux éléments filtrants (1, 2)
    - comportant une source (60) de fluide chauffant pour le chauffage des éléments filtrants (1, 2),
    - comportant des dispositifs d'amenée (35) pour amener aux éléments filtrants (1, 2) le liquide avec les particules solides qui y sont dispersées,
    - comportant des canaux (5, 6) dans les éléments filtrants (1, 2) pour évacuer le liquide et
    - comportant des dispositifs de collecte (17), disposés sous les éléments filtrants (1, 2), pour les particules solides déshydratées et séchées,
    appareil caractérisé par le fait
    - que les éléments filtrants (1, 2) sont disposés entre une tête (8) fixe par rapport à l'appareil et une tête (9) qui peut coulisser horizontalement,
    - que les têtes (8, 9) peuvent être reliées à la source de vide (13, 49) et à une chambre sous pression (29), qui peut être reliée à la source de pression, pour l'alimentation en liquide contenant des particules solides qui y sont dispersées,
    - que les éléments filtrants sont formés de plaques filtrantes sous vide (1) et de plaques chauffantes (2) alternativement disposées les unes à la suite des autres,
    - que chaque plaque filtrante sous vide (1) présente un cadre fermé (27) avec une chambre sous vide (4) qui est obturée respectivement des deux côtés par une paroi séparatrice poreuse (26) qui est rapportée, avec étanchéité au gaz, sur le cadre (27) le long d'une surface de contact (28), qui est reliée, par des canaux intermédiaires (5), à des canaux (6) d'évacuation de l'eau prévus dans le cadre (27) et à travers laquelle s'étend une ouverture d'alimentation (15), et
    - que chaque plaque chauffante (2) présente un cadre fermé (23) qui comporte des canaux (6) d'évacuation de l'eau qui, lorsque la presse filtrante est fermée, sont orientés dans l'alignement des canaux (6) d'évacuation de l'eau prévus dans le cadre (27) des plaques filtrantes sous vide (20), et qui est divisé symétriquement, le long de sa plus grande section, par une membrane chauffante électrique (24) ou par une membrane à fluide chauffant (61), en deux chambres réceptrices (14) qui sont reliées par une ouverture d'alimentation (15) et dont chacune est délimitée par le cadre (23) de la plaque chauffante (2), par la membrane chauffante (24) ou la membrane à fluide chauffant (61) correspondante et par la paroi séparatrice poreuse (26) de la plaque filtrante sous vide (1) voisine.

2. Appareil selon la revendication 1, caractérisé par le fait, que dans la chambre d'alimentation sous pression (29), est prévu un échangeur de chaleur (11) à travers lequel passe le liquide aspiré à travers les parois séparatrices poreuses (26) des plaques filtrantes sous vide (1).

3. Appareil selon la revendication 1 ou 2, caractérisé par le fait que la liaison amovible (10) de la tête mobile (9), par une conduite de raccordement (69) fixe en position, à la source de vide (49, 13), présente une ouverture en cône creux (65), côté tête, et un cône élastique mobile (66) qui s'enfiche coaxialement sur la conduite de raccordement (69) et qui est relié à la conduite de raccordement (69) par l'intermédiaire d'éléments de guidage (67) à ressorts (68).

4. Appareil selon l'une des revendications 1 à 3, caractérisé par le fait que la liaison amovible (16) de la tête mobile (9), par une conduite de raccordement (72) fixe en position, à la chambre d'alimentation sous pression (12), présente une ouverture en cône creux (70), côté tête, et une buse élastique de forme conique (71) rapportée coaxialement sur la conduite de raccordement (72).

5. Appareil selon l'une des revendications 1 à 4, caractérisé par le fait que les éléments filtrants (1, 2) sont disposés, avec liberté de coulisser longitudinalement, sur des éléments supports horizontaux (39) qui peuvent être mis en vibration.

6. Appareil selon la revendication 5, caractérisé par le fait que les éléments supports horizontaux (39) sont équipés d'appuis verticaux (40) respectivement disposés dans un espace creux central (41) de colonnes de supportverticales (22), appui dont chacun repose librement sur un corps de frappe (42) mobile dans la colonne support (22) et présentant des galets (43) qui s'appuient, avec frottement, contre un excentrique (44) monté, dans une boîte massive (45), sur un arbre (46) qui s'étend sur l'axe longitudinal de la presse filtrante, les arbres (46) étant couplés entre eux par une tringle de liaison (47).

7. Appareil selon l'une des revendications 1 à 6, caractérisé par le fait que la partie supérieure de la chambre d'alimentation sous pression (29) est en liaison avec un ballon de gaz d'équilibrage (30), que sa partie inférieure est reliée, par un robinet (31), à un dispositif de compression (32), que la chambre d'alimentation sous pression (29) est reliée a un tube (33) qui est monté en parallèle et qui est relié, à une première extrémité, par un second robinet (34), au dispositif de compression (32) et, à son autre extrémité, avec le dispositif d'amenée, formé par un tube d'alimentation sous pression (35), du liquide contenant les particules solides qui y sont dispersées, et que le tube d'alimentation sous pression (35) est relié, d'un côté, par un troisième robinet (36), à la chambre d'alimentation sous pression (29) et, de l'autre côté, à la tête (8) fixe par rapport à l'appareil et peut être relié à la tête (9) apte à coulisser horizontalement.

8. Appareil selon l'une des revendications 1 à 7, caractérisé par le fait que sous les têtes (8, 9), les plaques filtrantes sous vide (1) et les plaques chauffantes (2), est disposée une trémie (17)à vis sans fin (18), que sur la trémie (17) sont rapportées des conduites d'air (19) sur lesquelles sont rapportés des panneaux mobiles (20), et que les panneaux mobiles (20) sont suspendus à une voûte de ventilation (21) qui repose sur les colonnes de support (22).

fig.1

fig. 2

EP 0 263 197 B1

fig 3

fig 4

fig 5

fig 6

fig.7

fig.8

fig. 9

fig. 10

fig 11